(19) Europäisches Patentamt / European Patent Office / Office européen des brevets

(11) **EP 3 420 604 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **17707783.1**

(22) Anmeldetag: **21.02.2017**

(51) Int Cl.:
**H01M 2/10** *(2006.01)*

(86) Internationale Anmeldenummer:
**PCT/EP2017/053829**

(87) Internationale Veröffentlichungsnummer:
**WO 2017/144428 (31.08.2017 Gazette 2017/35)**

(54) **ZELLMODUL FÜR EINE BATTERIE EINES KRAFTFAHRZEUGS SOWIE VERFAHREN ZUM HERSTELLEN EINES SOLCHEN ZELLMODULS**

CELL MODULE FOR A VEHICLE BATTERY AND PROCESS OF MANUFACTURING SUCH A CELL MODULE

MODULE DE CELLULES POUR UNE BATTERIE D'UN VÉHICULE ET PROCÉDÉ DE FABRICATION D'UN TEL MODULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2016 DE 102016202912**

(43) Veröffentlichungstag der Anmeldung:
**02.01.2019 Patentblatt 2019/01**

(73) Patentinhaber: **Bayerische Motoren Werke Aktiengesellschaft 80809 München (DE)**

(72) Erfinder:
• **IDIKURT, Tuncay**
**81541 München (DE)**
• **LUSTIG, Robert**
**81679 München (DE)**
• **KOTTER, Philip**
**80796 München (DE)**
• **MUCK, Alexander**
**81827 München (DE)**

(56) Entgegenhaltungen:
**WO-A1-2012/120107     DE-A1- 4 226 428
DE-A1-102011 013 617**

**Beschreibung**

Die Erfindung betrifft ein Zellmodul für eine Batterie eines Kraftfahrzeugs sowie ein Verfahren zum Herstellen eines solchen Zellmoduls.

Aus dem allgemeinen Stand der Technik und insbesondere aus dem Serienfahrzeugbau ist es bekannt, Kraftfahrzeuge wie beispielsweise Kraftwagen mit elektrifizierten Antriebssträngen auszustatten. Ein solcher elektrifizierter Antriebsstrang wird auch als alternativer Antriebsstrang oder alternativer Antrieb bezeichnet und umfasst wenigstens eine elektrische Maschine, welche als Elektromotor zum Antreiben des jeweiligen Kraftfahrzeugs betrieben werden kann. Somit kann das Kraftfahrzeug rein elektrisch angetrieben werden. Alternativ oder zusätzlich ist es denkbar, dass ein solcher Antriebsstrang einen Verbrennungsmotor zum Antreiben des Kraftfahrzeugs umfasst, wobei die elektrische Maschine beispielsweise den Verbrennungsmotor beim Antreiben des Kraftfahrzeugs unterstützen kann. Das Kraftfahrzeug ist somit beispielsweise als Elektrofahrzeug oder Hybridfahrzeug ausgebildet.

Um die elektrische Maschine in ihrem Motorbetrieb betreiben zu können, muss die elektrische Maschine mit elektrischem Strom beziehungsweise elektrischer Energie versorgt werden. Hierfür kommt üblicherweise wenigstens ein elektrischer Energiespeicher in Form einer Batterie zum Einsatz, mittels welcher elektrische Energie gespeichert werden kann. Die elektrische Maschine kann in ihrem Motorbetrieb mit in dem elektrischen Energiespeicher gespeicherter elektrischer Energie versorgt werden. Üblicherweise weist ein solcher elektrifizierter Antriebsstrang ein hohes Gewicht und hohe Kosten auf.

Die WO 2012/120107 A1 offenbart einen elektrischen Energiespeicher für Kraftfahrzeuge, mit zumindest einem Batteriemodul mit mehreren jeweils zumindest eine Zelle aufweisenden Einzelmodulen. Die Einzelmodule sind zwischen zwei äußeren Endplatten in einem Stapel angeordnet. Dabei ist es vorgesehen, dass das Batteriemodul von zumindest einem Spannband umschlungen ist, wobei die Zellen durch die Endplatten aneinander gepresst sind.

Aufgabe der vorliegenden Erfindung ist es daher, ein Zellmodul sowie ein Verfahren zum Herstellen eines solchen Zellmoduls zu schaffen, sodass das Gewicht und die Kosten von elektrifizierten Antriebssträngen für Kraftfahrzeuge besonders gering gehalten werden können.

Diese Aufgabe wird erfindungsgemäß durch ein Zellmodul mit den Merkmalen des Patentanspruchs 1 sowie durch ein Verfahren mit den Merkmalen des Patentanspruchs 8 gelöst. Vorteilhafte Ausgestaltungen der Erfindung sind Gegenstand der abhängigen Ansprüche.

Ein erster Aspekt der Erfindung betrifft ein Zellmodul für eine Batterie eines Kraftfahrzeugs, insbesondere eines Kraftwagens wie beispielsweise eines Personenkraftwagens. Das Zellmodul umfasst eine Mehrzahl von Batteriezellen zum Speichern von elektrischer Energie beziehungsweise elektrischem Strom. Das Zellmodul kann somit in einem elektrifizierten Antriebsstrang zum Einsatz kommen, welcher beispielsweise in seinem vollständig hergestellten Zustand wenigstens eine elektrische Maschine umfasst. Die elektrische Maschine ist beispielsweise in einem Motorbetrieb und somit als Elektromotor betreibbar, mittels welchem das Kraftfahrzeug antreibbar ist. Um die elektrische Maschine in dem Motorbetrieb zu betreiben, wird die elektrische Maschine mit in der Batterie und somit in dem Zellmodul beziehungsweise in den Batteriezellen gespeicherter elektrischer Energie versorgt.

Das Zellmodul umfasst ferner einen Modulrahmen, welcher wenigstens zwei Druckelemente und wenigstens einen auf Zug belasteten und aus einem Werkstoff gebildeten Zuganker umfasst. Die Batteriezellen sind dabei zwischen den Druckelementen angeordnet. Die Druckelemente sind beispielsweise entlang einer Richtung voneinander beabstandet angeordnet, wobei die Batteriezellen beispielsweise entlang der Richtung aufeinanderfolgend beziehungsweise hintereinander und dabei zwischen den Druckelementen angeordnet sind. Mittels des Zugankers sind die Druckelemente unter Vermittlung der Batteriezellen gegeneinander gespannt, wodurch die Batteriezellen verpresst sind. Beispielsweise sind die Druckelemente über den auf Zug belasteten Zuganker miteinander verbunden, sodass die zwischen den Druckelementen angeordneten Batteriezellen verpresst sind. Dadurch, dass der Zuganker auf Zug belastet ist, werden die Batteriezellen mittels der Druckelemente zusammengedrückt beziehungsweise zusammengepresst.

Um nun das Gewicht und die Kosten des Zellmoduls und somit der Batterie sowie des elektrifizierten Antriebsstrangs insgesamt besonders gering halten zu können, sind die Druckplatten mittels des Zugankers derart gegeneinander gespannt, dass eine Streckgrenze oder die 0,2-%-Dehngrenze des Werkstoffes des Zugankers erreicht ist. Mit anderen Worten ist der Zuganker zum Verspannen der Druckelemente gegeneinander und somit zum Verpressen der Batteriezellen derart auf Zug belastet, dass die Streckgrenze beziehungsweise die 0,2-%-Dehngrenze des Werkstoffes des Zugankers erreicht ist. Durch die Verwendung des Modulrahmens kann der Bauraumbedarf des Zellmoduls und somit der Batterie insgesamt gering gehalten werden. Ferner ist es möglich, die einzelnen Batteriezellen kompakt zusammenzuhalten, sodass das Zellmodul als vormontierbare beziehungsweise vormontierte Baueinheit gehandhabt werden kann. Dadurch kann die Batterie besonders einfach und somit zeit- und kostengünstig hergestellt werden, sodass die Kosten der Batterie und somit des elektrifizierten Antriebsstrangs gering gehalten werden kann.

Darüber hinaus ist es möglich, aufgrund der beschriebenen, mittels des Zugankers bewirkten Verspannung der Batteriezellen besonders kosten- und gewichtsgünstige Werkstoffe für den Zuganker und insbesondere für den Modulrahmen insgesamt zu verwenden, sodass das Gewicht und die Kosten des Zellmoduls und somit des elektrifizierten Antriebsstrangs besonders gering gehalten werden können.

Bei dem Werkstoff des Zugankers handelt es sich beispielsweise um einen metallischen Werkstoff, insbesondere um ein Leichtmetall beziehungsweise eine Leichtmetalllegierung wie beispielsweise Aluminium beziehungsweise einer Aluminiumlegierung, sodass die Batteriezellen besonders gut verpresst und das Gewicht und die Kosten besonders gering gehalten werden können.

Der Erfindung liegt insbesondere die Idee zugrunde, elastische Eigenschaften des Werkstoffes in der Art auszunutzen beziehungsweise zu wählen, dass beispielsweise während der Lebensdauer des Zellmoduls auftretende zyklische Belastungen rein zug-elastisch, das heißt durch rein zug-elastische Eigenschaften des Werkstoffes abgefedert beziehungsweise aufgenommen oder kompensiert werden, wohingegen eine alterungsbedingte Längenzunahme des Zellmoduls nun gezielt durch plastische Verformung des Zugankers vorgehalten wird.

Vorzugsweise sind die Druckplatten mittels des Zugankers derart gegeneinander gespannt, dass die Streckgrenze beziehungsweise die 0,2-%-Dehngrenze des Werkstoffes des Zugankers genau erreicht ist, das heißt dass der Zuganker beziehungsweise sein Werkstoff exakt bis zur Streckgrenze beziehungsweise zur 0,2-%-Dehngrenze belastet ist. Kommt es während der Lebensdauer des Zellmoduls beispielsweise zu einer Ausdehnung der Batteriezellen, insbesondere entlang der zuvor genannten Richtung, entlang welcher die Druckelemente voneinander beabstandet sind, so kommt es zu einer zunehmenden Dehnung des Zugankers. Da die Streckgrenze beziehungsweise die 0,2-%-Dehngrenze bereits zu Beginn der Lebensdauer des Zellmoduls, insbesondere exakt beziehungsweise genau, erreicht ist, führt jede weitere inkrementelle Dehnung des Zugankers zu einer plastischen Verformung des Zugankers, wobei diese plastische Verformung bis zum Ende der Lebensdauer zu keiner Einschnürung im Werkstoff des Zugankers führen darf beziehungsweise sollte. Hierdurch ist gewährleistet, dass eine mittels des Zugankers bewirkte Verspannkraft zum Verpressen der Batteriezellen während der Lebensdauer zumindest nahezu konstant bleibt. Mit anderen Worten kann eine zumindest annähernd gleichartige Belastung der Batteriezellen über die Lebensdauer hinweg gewährleistet werden. Somit können veränderliche mechanische Belastungen der Batteriezellen über die Lebensdauer vermieden werden. Ferner können die Werkstoff- beziehungsweise Materialeigenschaften des Zugankers zumindest nahezu vollständig ausgenutzt werden, sodass eine gewichts- und kostenintensive Überdimensionierung des Zugankers und somit des Modulrahmens insgesamt vermieden werden kann. In der Folge können das Gewicht und die Kosten gering gehalten werden.

Die Streckgrenze wird üblicherweise mit $R_e$ bezeichnet und ist ein Werkstoffkennwert und bezeichnet diejenige Spannung, bis zu der der Werkstoff bei einachsiger und momentenfreier Zugbeanspruchung keine dauerhafte plastische Verformung zeigt. Es handelt sich hierbei um eine Fließgrenze. Die zwischen den Druckelementen angeordneten und beispielsweise hintereinander beziehungsweise aufeinanderfolgend angeordneten Batteriezellen bilden ein Batteriepaket, dessen Länge beispielsweise alterungsbedingt zunehmen kann. Infolge dieser Längenzunahme steigt - ausgehend von der Streckgrenze beziehungsweise von der 0,2-%-Dehngrenze - die auf den Zuganker wirkende Belastung beziehungsweise die Dehnung des Zugankers, sodass es zu einer plastischen Verformung des Zugankers kommt.

Erfindungsgemäß ist die Streckgrenze oder die 0,2-%-Dehngrenze in vollständig geladenem Zustand der Batteriezellen erreicht. Hierdurch ist, insbesondere zu Beginn der Lebensdauer des Zellmoduls, ein definierter Zustand geschaffen, von welchem ausgehend es bei einer Längenzunahme des Batteriepakets zu einer gewünschten plastischen Verformung des Zugankers kommt. Insbesondere ist es durch diese Ausführungsform möglich, zyklische Belastungen rein zug-elastisch abzufedern beziehungsweise aufzunehmen oder zu kompensieren. Kommt es beispielsweise ausgehend von dem vollständig geladenen Zustand der Batteriezellen zu einer Längenabnahme beziehungsweise Längenverkleinerung des Batteriepakets, woraufhin es wieder zu einer solchen Längenzunahme des Batteriepakets kommt, dass die Streckgrenze beziehungsweise die 0,2-%-Dehngrenze nicht überschritten wird, so können diese Längenänderungen elastisch, insbesondere zug-elastisch, das heißt durch elastische Verformung des Zugankers aufgenommen werden. Bei alterungsbedingten Längenzunahmen ausgehend von der Streckgrenze beziehungsweise der 0,2-%-Dehngrenze jedoch wird die Streckgrenze beziehungsweise 0,2-%-Dehngrenze überschritten, sodass derartige Längenzunahmen durch plastische Verformung des Zugankers aufgenommen werden.

In vorteilhafter Ausgestaltung ist die Streckgrenze die obere Streckgrenze, welche üblicherweise auch mit $R_{eH}$ bezeichnet wird. Weist der Werkstoff des Zugankers beispielsweise eine obere Streckgrenze $R_{eH}$ sowie eine untere Streckgrenze $R_{eL}$ auf, so handelt es sich bei der zuvor genannten Streckgrenze vorzugsweise um die obere Streckgrenze $R_{eH}$, sodass es bei einer Längenzunahme des Batteriepakets und somit bei zunehmender Dehnung des Zugankers - ausgehend von der oberen Streckgrenze - zu einer plastischen Verformung des Zugankers kommt.

Als besonders vorteilhaft hat es sich gezeigt, wenn eines der Druckelemente als ein Festlager ausgebildet ist, welches an einem Bauelement, insbesondere einem Gehäuse, der Batterie festlegbar ist. Die Batterie umfasst somit in ihrem vollständig hergestellten Zustand das Zellmodul mindestens ein weiteres Bauelement, welches beispielsweise als Gehäuse ausgebildet ist. Dabei ist das Zellmodul an dem weiteren Bauelement gehalten. Hierbei ist es vorzugsweise vorgesehen, dass eines der Druckelemente als ein Festlager ausgebildet ist, welches an dem weiteren Bauelement, insbesondere dem Gehäuse, der Batterie festlegbar beziehungsweise festgelegt ist. Hierdurch kann eine definierte und sichere sowie gewichts- und kostengünstige Halterung des Zellmoduls gewährleistet werden, ohne dass eine übermäßige Anzahl an zusätzlichen, gewichts- und kostenintensiven Halteelementen vorgesehen und erforderlich ist.

Um die Kosten und das Gewicht des Zellmoduls besonders gering zu halten, ist es bei einer weiteren Ausführungsform der Erfindung vorgesehen, dass das andere Druckelement als ein Loslager ausgebildet ist, welches Verschiebungen des anderen Druckelements relativ zu dem Bauelement der Batterie zulässt. Mit anderen Worten ist das andere Druckelement vorzugsweise als Loslager und somit gezielt verschieblich gelagert ausgeführt. Hierdurch können Verspannungen und somit übermäßige Belastungen des Zellmoduls vermieden werden, sodass das Zellmodul besonders gewichts- und kostengünstig ausgestaltet werden kann.

Um das Gewicht und die Kosten des Zellmoduls besonders gering zu halten, ist es bei einer weiteren Ausführungsform der Erfindung vorgesehen, dass der Zuganker stoffschlüssig mit den Druckelementen verbunden ist. Hierzu ist der Zuganker beispielsweise mit den Druckelementen verschweißt. Beispielsweise sind die Druckelemente aus einem metallischen Werkstoff gebildet. Ferner ist es denkbar, dass die Druckelemente als Druckplatten ausgebildet sind.

Zur Erfindung gehört auch eine Batterie für ein Kraftfahrzeug, insbesondere einen Kraftwagen wie beispielsweise einen Personenkraftwagen, wobei die Batterie wenigstens ein erfindungsgemäßes Zellmodul aufweist. Vorteile und vorteilhafte Ausgestaltungen des erfindungsgemäßen Zellmoduls sind als Vorteile und vorteilhafte Ausgestaltungen der erfindungsgemäßen Batterie anzusehen und umgekehrt.

Ein zweiter Aspekt der Erfindung betrifft ein Verfahren zum Herstellen eines Zellmoduls, insbesondere eines erfindungsgemäßen Zellmoduls gemäß dem ersten Aspekt der Erfindung, für eine Batterie eines Kraftfahrzeugs. Bei einem ersten Schritt des Verfahrens wird eine Mehrzahl von Batteriezellen zum Speichern von elektrischer Energie beziehungsweise elektrischem Strom bereitgestellt. Bei einem zweiten Schritt des Verfahrens wird ein Modulrahmen bereitgestellt, welcher wenigstens zwei Druckelemente und wenigstens einen aus einem Werkstoff, insbesondere einem metallischen Werkstoff, gebildeten Zuganker umfasst. Bei einem dritten Schritt des Verfahrens werden die Batteriezellen zwischen den Druckelementen angeordnet. Beispielsweise werden die Druckelemente derart angeordnet, dass sie entlang einer Richtung voneinander beabstandet sind. Dabei werden die Batteriezellen beispielsweise derart zwischen den Druckelementen angeordnet, dass die Batteriezellen entlang der Richtung hintereinander beziehungsweise aufeinanderfolgend angeordnet sind. Bei einem vierten Schritt des Verfahrens werden die Druckelemente unter Vermittlung der Batteriezellen mittels des Zugankers gegeneinander gespannt, wodurch der Zuganker auf Zug belastet wird. Dabei werden die Druckplatten mittels des Zugankers derart gegeneinander gespannt, dass der Werkstoff des Zugankers eine Streckgrenze oder die 0,2-%-Dehngrenze, insbesondere genau beziehungsweise exakt, erreicht. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Vorzugsweise ist die Streckgrenze beziehungsweise die 0,2-%-Dehngrenze des Werkstoffes des Zugankers unmittelbar nach der Herstellung des Zellmoduls und somit zu Beginn seiner Lebensdauer exakt erreicht. Dadurch können zyklische Belastungen - insbesondere ausgehend von der Streckgrenze beziehungsweise 0,2-%-Dehngrenze - durch elastische Verformung des Zugankers aufgenommen werden, wobei alterungsbedingte Längenzunahmen durch plastische Verformung des Zugankers vorgehalten werden. Dies bedeutet beispielsweise, dass zu Beginn der Lebensdauer des Zellmoduls der Modulrahmen vorzugsweise mit vollgeladenen Batteriezellen exakt bis zur Streckgrenze, insbesondere $R_{eH}$, beziehungsweise bis zur 0,2-%-Dehngrenze ($R_{p,0,2}$) belastet wird. Jede weitere inkrementelle Dehnung des Zugankers führt zu einer plastischen Verformung des Zugankers, wodurch gewährleistet ist, dass eine mittels des Modulrahmens bewirkte und auf die Batteriezellen wirkende Verspannkraft zum Verpressen der Batteriezellen auf zumindest nahezu konstantem Niveau bleibt.

Bei einer vorteilhaften Ausführungsform des zweiten Aspekts der Erfindung ist es vorgesehen, dass die Batteriezellen mittels einer von dem Modulrahmen unterschiedlichen Verpressvorrichtung verpresst werden. Die Batteriezellen werden in ihrem mittels der Verpressvorrichtung verpressten Zustand mit dem Modulrahmen versehen. Insbesondere ist es beispielsweise zunächst vorgesehen, dass mittels der Verpressvorrichtung die Druckelemente und die zwischen den Druckelementen angeordneten Batteriezellen verpresst werden, sodass die zwischen den Druckelementen angeordneten Batteriezellen über die Druckelemente mittels der Verpressvorrichtung verpresst und somit zusammengedrückt beziehungsweise zusammengepresst werden. In diesem Zustand wird der Zuganker mit den Druckelementen gekoppelt, insbesondere verbunden, woraufhin beispielsweise das Zellmodul von der Verpressvorrichtung gelöst wird beziehungsweise woraufhin die durch die Verpressvorrichtung bewirkte Verpressung beendet wird. Dabei erreicht der Werkstoff des Zugankers, vorzugsweise direkt oder unmittelbar, nach Beenden der durch die Verpressvorrichtung bewirkten Verpressung die Streckgrenze oder die 0,2-%-Dehngrenze, insbesondere genau oder exakt. Dadurch ist zu Beginn der Lebensdauer des Zellmoduls ein definierter Ausgangszustand geschaffen, von dem ausgehend zyklische Belastungen durch elastische Verformung, jedoch alterungsbedingte Längenzunahmen des Batteriepakets durch plastische Verformung des Zugankers aufgenommen werden können. Dadurch können besonders gewichts- und kostengünstige Werkstoffe für den Zuganker verwendet werden.

Schließlich hat es sich als besonders vorteilhaft gezeigt, wenn der Zuganker in dem mittels der Verpressvorrichtung verpressten Zustand der Batteriezelle mit den Druckelementen verbunden wird. Dadurch wird der Zuganker beispielsweise dann und erst dann auf Zug belastet, wenn das durch die Verpressvorrichtung bewirkte Verpressen beendet wird, das heißt wenn die Verpressvorrichtung von dem Zellmodul gelöst wird. Der Zuganker wird somit genutzt, um nach dem Beenden der durch die Verpressvorrichtung wirkenden Verpressung der Batteriezellen eine Verpressung der Batteriezellen beizubehalten beziehungsweise zu bewirken, sodass der Zuganker auf Zug belastet wird. Durch dieses Verbinden des Zugankers mit den Druckelementen können ein definierter Zustand und insbesondere ein definierter Ausgangszustand sowie eine definierte Belastung des Zugankers, insbesondere zu Beginn der Lebensdauer des Zellmoduls, realisiert werden. In der Folge ist es definiert möglich, zyklische Belastungen beziehungsweise Längenveränderungen durch elastische Verformung des Zugankers zu kompensieren und alterungsbedingte Längenzunahmen des Batteriepakets durch plastische Verformung des Zugankers vorzuhalten. In der Folge können die Kosten und das Gewicht des Zellmoduls besonders gering gehalten werden.

Weitere Einzelheiten der Erfindung ergeben sich aus der nachfolgenden Beschreibung eines bevorzugten Ausführungsbeispiels mit den zugehörigen Zeichnungen. Dabei zeigen:

Fig. 1    eine schematische Draufsicht eines Zellmoduls für eine Batterie eines Kraftfahrzeugs, mit wenigstens einem aus einem Werkstoff gebildeten Zuganker, welcher zum Verpressen von Batteriezellen des Zellmoduls derart auf Zug belastet ist, dass eine Streckgrenze oder die 0,2-%-Dehngrenze des Werkstoffes des Zugankers erreicht ist;

Fig. 2    eine schematische Seitenansicht des Zellmoduls; und

Fig. 3    ein Spannungs-Dehnungs-Diagramm zum Veranschaulichen eines Verhaltens des Zugankers, insbesondere über die Lebensdauer des Zellmoduls.

In den Figuren sind gleiche oder funktionsgleiche Elemente mit gleichen Bezugszeichen versehen.

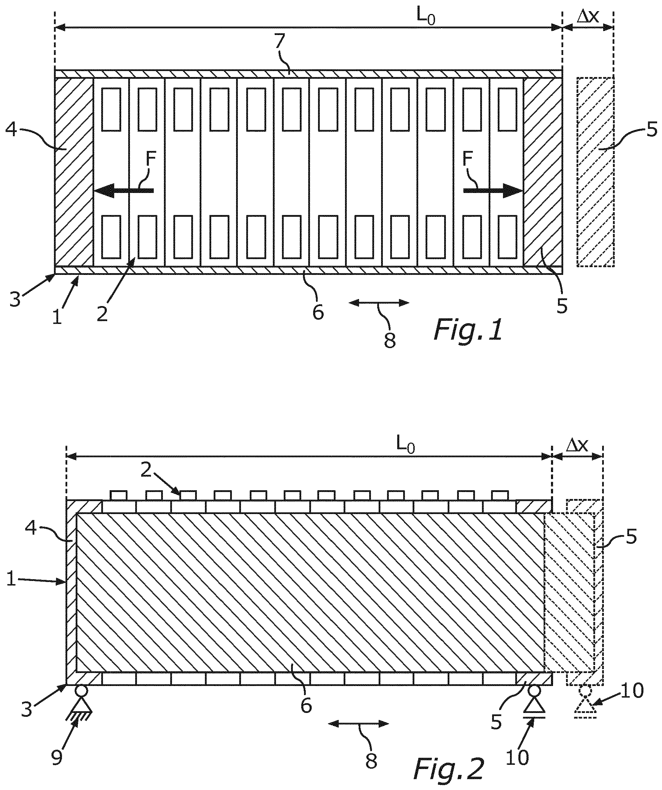

Fig. 1 zeigt in einer schematischen Draufsicht ein im Ganzen mit 1 bezeichnetes Zellmodul für eine Batterie eines Kraftfahrzeugs, insbesondere eines Kraftwagens wie beispielsweise eines Personenkraftwagens. In seinem vollständig hergestellten Zustand weist das Kraftfahrzeug einen elektrifizierten Antriebsstrang auf, welcher wenigstens eine elektrische Maschine und die zuvor genannte Batterie mit dem Zellmodul 1 aufweist. Die Batterie weist in ihrem vollständig hergestellten Zustand beispielsweise eine Mehrzahl von Zellmodulen auf, von denen in Fig. 1 das mit 1 bezeichnete Zellmodul stellvertretend gezeigt ist.

Die elektrische Maschine ist in einem Motorbetrieb und somit als Elektromotor betreibbar, sodass das Kraftfahrzeug mittels des Elektromotors angetrieben werden kann. Um die elektrische Maschine in dem Motorbetrieb zu betreiben, muss die elektrische Maschine mit elektrischem Strom beziehungsweise elektrischer Energie versorgt werden. Die Batterie ist ein elektrischer Energiespeicher, mittels beziehungsweise in welchem elektrische Energie beziehungsweise elektrischer Strom gespeichert werden kann. Die elektrische Maschine kann mit in der Batterie gespeicherter elektrischer Energie versorgt werden, um dadurch die elektrische Maschine in ihrem Motorbetrieb zu betreiben.

Hierzu umfasst das Zellmodul 1 eine Mehrzahl von Batteriezellen 2, mittels welchen die elektrische Energie gespeichert werden kann. Die jeweilige Batteriezelle 2 umfasst beispielsweise ein Zellengehäuse, in welchem beispielsweise ein Elektrolyt der jeweiligen Batteriezelle 2 aufgenommen ist. Ferner umfasst das Zellmodul 1 einen im Ganzen mit 3 bezeichneten Modulrahmen, welcher wenigstens zwei Druckelemente in Form von Druckplatten 4 und 5 aufweist. Ferner umfasst der Modulrahmen 3 auf Zug belastete Zuganker 6 und 7, welche jeweils aus einem Werkstoff, insbesondere aus einem metallischen Werkstoff, gebildet sind.

Aus Fig. 1 ist erkennbar, dass die Druckplatten 4 und 5 entlang einer in Fig. 1 durch einen Doppelpfeil 8 veranschaulichten Richtung voneinander beabstandet angeordnet sind. Dabei sind die Batteriezellen 2 entlang der genannten Richtung zwischen den Druckplatten 4 und 5 angeordnet, wobei die Batteriezellen 2 entlang der genannten Richtung aufeinanderfolgend beziehungsweise hintereinander angeordnet sind. Mittels der Zuganker 6 und 7 sind die Druckplatten 4 und 5 unter Vermittlung der Batteriezellen 2 gegeneinander gespannt, wodurch die Batteriezellen 2 verpresst sind. Mit anderen Worten sind die auf Zug belasteten Zuganker 6 und 7 mit den Druckplatten 4 und 5 gekoppelt, insbesondere verbunden, sodass die auf Zug belasteten Zuganker 6 und 7 die Druckplatten 4 und 5 miteinander verbinden, wodurch die Batteriezellen 2 verpresst sind. Die Batteriezellen 2 bilden ein Batteriepaket, welches eine entlang der Richtung verlaufende Länge aufweist. Dabei ist in Fig. 1 eine Ausgangslänge des Batteriepakets gezeigt, wobei in Fig. 1 ferner eine Ausgangslänge $L_0$ des Zellmoduls 1 gezeigt ist.

Im Rahmen eines Verfahrens zum Herstellen des Zellmoduls 1 werden die beispielsweise konvexen und/oder prismatischen Batteriezellen 2 aufeinander gestapelt. Die gestapelten Batteriezellen 2 werden beispielsweise mittels einer von dem Zellmodul 1 unterschiedlichen Verpressvorrichtung auf ein bestimmtes Nennmaß verpresst und anschließend beziehungsweise im mittels der Verpressvorrichtung verpressten Zustand mit dem Modulrahmen 3 umspannt. Dann wird die Verpressvorrichtung gelöst. Darunter ist zu verstehen, dass die mittels der Verpressvorrichtung bewirkte Verpressung beendet wird. Infolge des Lösens der Verpressvorrichtung wirkt eine Rückstellkraft der Batteriezellen 2, insbesondere über die Druckplatten 4 und 5, auf die mit den Druckplatten 4 und 5 verbundenen, insbesondere verschweißten, Zuganker 6 und 7, sodass beispielsweise eine erste, insbesondere elastische, Längung der Zuganker 6 und 7 beziehungsweise des Zellmoduls 1 insgesamt direkt nach der Herstellung stattfindet. Eine Längung der Zuganker 6 und 7 beziehungsweise des Zellmoduls 1 insgesamt wird auch als Längenzunahme bezeichnet. Die genannte erste, insbesondere elastische, Längung, wird auch mit $\varepsilon_{Montage}$ bezeichnet. Somit liegt eine permanente, quasi statische Spannung über die Zuganker 6 und 7 an.

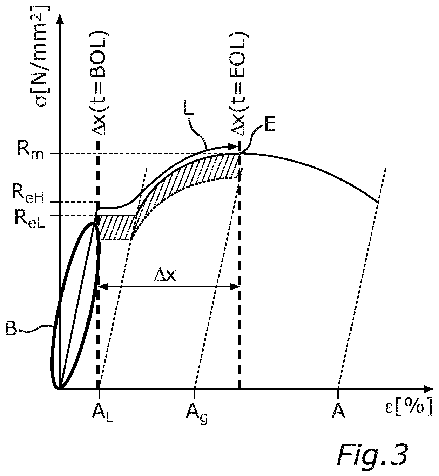

Fig. 3 zeigt ein Spannungs-Dehnungs-Diagramm des jeweiligen Werkstoffs der Zuganker 6 und 7. Wie allgemein bekannt ist, zeigt das Spannungs-Dehnungs-Diagramm die Zugfestigkeit $R_m$, die obere Streckgrenze $R_{eH}$, die untere Streckgrenze $R_{eL}$, die Lüdersdehnung $A_L$, die Gleichmaßdehnung $A_g$, und die Bruchdehnung A, ab welcher es zum Bruch kommt. Der Einschnürbeginn ist mit E bezeichnet. Links der oberen Streckgrenze $R_{eH}$ befindet sich der elastische Bereich B des jeweiligen Zugankers 6 beziehungsweise 7 beziehungsweise des jeweiligen Werkstoffes, aus welchem der jeweilige Zugang 6 beziehungsweise 7 gebildet ist. Der Modulrahmen 3, insbesondere die Zuganker 6 und 7, können beispielsweise derart dimensioniert sein, dass sämtliche quasi statischen und zyklischen Belastungen den rein elastischen Bereich B des verwendeten Werkstoffes nicht überschreiten. Außerdem kann vorgesehen sein, dass beide Druckplatten 4 und 5 als Festlager ausgelegt sind, sodass die Druckplatten 4 und 5 beispielsweise an einem weiteren Bauelement wie beispielsweise einem Gehäuse der Batterie, insbesondere unverschieblich, festgelegt sind. Eine solche Auslegung des Modulrahmens 3 und der Druckplatten 4 und 5 als Festlager ist jedoch nachteilhaft, wie im Folgenden noch genauer erläutert wird.

Die Batteriezellen 2 bewirken unter Betrieb eine zyklische Belastung durch Laden und Entladen, wobei diese zyklische Belastung zu zyklischen Dehnungen beziehungsweise Längenveränderungen, insbesondere Längenzunahmen führt. Diese zyklischen Dehnungen werden mit $\varepsilon_{SOC}$ bezeichnet. Unter dem Laden oder Aufladen der Batteriezellen 2 und somit der Batterie ist zu verstehen, dass elektrische Energie in die Batteriezellen 2 eingespeichert wird, das heißt dass die Batterie mit elektrischer Energie aufgeladen wird. Unter dem Entladen ist zu verstehen, dass in den Batteriezellen 2 beziehungsweise in der Batterie gespeicherte elektrische Energie aus der Batterie entnommen beziehungsweise von der Batterie abgeführt wird.

Ferner wirken Temperaturgradienten auf mechanische Modulkomponenten, mittels welchen die Batteriezellen 2 verspannt gehalten werden. Bei diesen mechanischen Modulkomponenten handelt es sich beispielsweise um die Zuganker 6 und 7 und die Druckplatten 4 und 5. Diese Temperaturgradienten bewirken temperaturbedingte Längenveränderungen beziehungsweise Dehnungsveränderungen oder Dehnungen, welche auch mit $\varepsilon_T$ bezeichnet werden. Diese zyklischen Längungen beziehungsweise Längenveränderungen überlagern eine zumindest näherungsweise lineare Zunahme der Länge des Zellmoduls 1 in Abhängigkeit von dessen Alter beziehungsweise Lebensdauer, gemessen beispielsweise an der Restkapazität der Batterie, wobei die zumindest näherungsweise lineare Zunahme auch als Längung oder Längenzunahme bezeichnet wird, welche auch mit $\varepsilon_{SOH}$ bezeichnet wird. Alle Ausdehnungen zusammen bewirken eine gegen den Modulrahmen 3 wirkende Kraft, welche auch als Schwellkraft bezeichnet wird und in Fig. 1 durch Kraftpfeile F veranschaulicht ist. Die Schwellkraft zieht eine in Fig. 1 mit $\Delta x$ bezeichnete Längung, das heißt Längenzunahme des Zellmoduls 1 und somit der Zuganker 6 und 7 nach sich. Somit lässt sich die Längung $\Delta x$ des Zellmoduls 1 in Abhängigkeit von der Zeit t und somit in Abhängigkeit von der Lebensdauer des Zellmoduls 1 formelmäßig beschreiben mit:

$$\Delta x(t) \approx \varepsilon_{SOH}(t) + \varepsilon_{SOC}(C) + \varepsilon_T(T) + \varepsilon_{Montage}$$

Dabei bezeichnet t die Zeit, C den Speicherzustand und T die Temperatur beziehungsweise die genannten Temperaturgradienten. Aus der zuvor beschriebenen, unvorteilhaften Auslegung des Zellmoduls 1 resultieren die Nachteile einer veränderlichen mechanischen Belastung der Batteriezellen 2 über der Lebensdauer, eines übermäßig hohen und unnötigen Gewichts, unnötig hoher Kosten sowie, dass die Materialeigenschaften nicht vollständig ausgenutzt werden. Ferner wird Betriebsverhalten nur teilweise vorgehalten.

Um diese Nachteile zu vermeiden, ist es nun vorgesehen, dass die Batteriezellen 2 derart verpresst sind beziehungsweise dass die Druckplatten 4 und 5 mittels der Zuganker 6 und 7 derart gegeneinander gespannt sind, dass, insbesondere nach dem Lösen der Verpressvorrichtung, die obere Streckgrenze $R_{eH}$ oder die 0,2-%-Dehngrenze $R_{p,0.2}$ des Werkstoffes der Zuganker 6 und 7 exakt beziehungsweise genau erreicht ist. Mit anderen Worten sind die Zuganker 6 und 7 infolge des Verspannens der Batteriezellen 2 derart belastet, dass die Streckgrenze beziehungsweise die 0,2-%-Dehngrenze des Werkstoffes exakt beziehungsweise genau erreicht ist. In Fig. 3 ist der Beginn der Lebensdauer des Zellmoduls 1 mit BOL bezeichnet, wobei das Ende der Lebensdauer mit EOL bezeichnet ist. Somit bezeichnet Δx(t=BOL) die Längenzunahme beziehungsweise Länge des Zellmoduls 1 zu Beginn der Lebensdauer, insbesondere unmittelbar beziehungsweise direkt nach dem Lösen der Verpressvorrichtung. Ferner bezeichnet Δx(t=EOL) die Längung beziehungsweise Längenzunahme des Zellmoduls 1 am Ende der Lebensdauer. Ferner veranschaulicht ein Pfeil L in Fig. 3 die Lebensdauer und dabei das Verhalten der Zuganker 6 und 7 während der Lebensdauer beziehungsweise über der Dehnung.

Bei dem Zellmodul 1 ist es somit vorgesehen, die elastischen Eigenschaften des Werkstoffes der Zuganker 6 und 7 in der Art auszunutzen beziehungsweise zu wählen, dass zyklische Belastungen rein zugelastisch abgefedert werden. Mit anderen Worten werden zyklische Belastungen durch elastische Verformung der Zuganker 6 und 7 und somit durch den elastischen Bereich B abgefedert beziehungsweise kompensiert. Dahingegen wird die alterungsbedingten Längenzunahme Δx des Zellmoduls 1 gezielt durch plastische Verformung der Zuganker 6 und 7 vorgehalten. Zu Beginn der Lebensdauer werden die Zuganker 6 und 7 in einem Zustand, in welchem die Batteriezellen 2 vollständig geladen sind, exakt bis zur Streckgrenze beziehungsweise bis zur 0,2-%-Dehngrenze belastet derart, dass die Streckgrenze beziehungsweise die 0,2-%-Dehngrenze des jeweiligen Werkstoffes der Zuganker 6 und 7 unmittelbar nach dem Lösen der Verpressvorrichtung exakt erreicht ist. Dies führt dazu, dass beispielsweise ausgehend von der oberen Streckgrenze $R_{eH}$ jede weitere inkrementelle Dehnung der Zuganker 6 und 7 zu einer plastischen Verformung der Zuganker 6 und 7 führt, wobei diese plastische Verformung jedoch bis zum Ende der Lebensdauer zu keiner Einschnürung im Werkstoff führen sollte. Hierdurch ist gewährleistet, dass eine mittels der Zuganker 6 und 7 bewirkte Verspannkraft zum Verpressen der Batteriezellen 2 auf zumindest näherungsweise konstantem Niveau bleibt.

Aus Fig. 2 ist erkennbar, dass es ferner vorzugsweise vorgesehen ist, die Druckplatte 4 als ein Festlager 9 auszubilden, welches an dem genannten Bauelement, insbesondere an dem Gehäuse, der Batterie festgelegt ist. Die andere Druckplatte 5 ist vorzugsweise als Loslager 10 ausgebildet, welches Verschiebungen der Druckplatte 5 relativ zu dem Bauelement der Batterie, insbesondere zum Gehäuse der Batterie, zulässt. Somit dient die Druckplatte 4 als Festlager 9, während die Druckplatte 5 gezielt verschieblich gelagert ausgeführt ist. Entsprechende Vorhalte für Ausdehnungen sind sodann in der beispielsweise als Hochvolt-Batterie (HV-Batterie) gezielt vorzuhalten. Infolge ihrer Ausgestaltung als HV-Batterie weist die Batterie beispielsweise eine Betriebsspannung von mehr als 50 Volt, insbesondere mehr als 60 Volt, auf. Insbesondere weist die Batterie eine Betriebsspannung von mehreren 100 Volt auf. In Fig. 1 und 2 ist das Zellmodul 1 in seiner Ausgangslänge $L_0$ mit durchgezogenen Linien veranschaulicht, wobei die Längung Δx durch gestrichelte Linien veranschaulicht ist.

Durch die beschriebene, gezielte Belastung der Zuganker 6 und 7 unmittelbar nach dem Lösen der Verpressvorrichtung derart, dass die Streckgrenze beziehungsweise die 0,2-%-Dehngrenze exakt erreicht ist, kann eine Überdimensionierung des Modulrahmens 3 vermieden werden, sodass der Modulrahmen 3 und somit das Zellmodul 1 insgesamt besonders gewichts- und kostengünstig ausgestaltet werden können. Ferner kann eine zumindest annähernd gleichartige Belastung der Batteriezellen 2 über der Lebensdauer gewährleistet werden.

Bezugszeichenliste

| | |
|---|---|
| 1 | Zellmodul |
| 2 | Batteriezellen |
| 3 | Modulrahmen |
| 4 | Druckplatte |
| 5 | Druckplatte |
| 6 | Zuganker |
| 7 | Zuganker |
| 8 | Doppelpfeil |
| 9 | Festlager |
| 10 | Loslager |
| B | elastischer Bereich |
| E | Einschnürung |
| F | Kraftpfeil |
| L | Pfeil |
| $R_m$ | Zugfestigkeit |
| $R_{eH}$ | obere Streckgrenze |
| $R_{eL}$ | untere Streckgrenze |
| $A_L$ | Lüdersdehnung |
| $A_g$ | Gleichmaßdehnung |
| A | Bruchdehnung |
| Δx | Längung |
| $L_0$ | Ausgangslänge |
| BOL | Beginn der Lebensdauer |
| EOL | Ende der Lebensdauer |

**Patentansprüche**

1.  Zellmodul (1) für eine Batterie eines Kraftfahrzeugs, mit einer Mehrzahl von Batteriezellen (2) zum Speichern von elektrischer Energie, und mit einem Modulrahmen (3), welcher wenigstens zwei Druckelemente (4, 5), zwischen welchen die Batteriezellen (2) angeordnet sind, und wenigstens einen auf Zug belasteten und aus einem Werkstoff gebildeten Zuganker (6, 7) umfasst, mittels welchem die Druckelemente (4, 5) unter Vermittlung der Batteriezellen (2) gegeneinander gespannt sind, wodurch die Batteriezellen (2) verpresst sind, **dadurch gekennzeichnet, dass**
die Druckplatten (4, 5) mittels des Zugankers (6, 7) derart gegeneinander gespannt sind, dass eine Streckgrenze oder die 0,2-%-Dehngrenze des Werkstoffes des Zugankers (6, 7) in vollständig geladenem Zustand der Batteriezellen (2) erreicht ist.

2. Zellmodul (1) nach Anspruch 1,
**dadurch gekennzeichnet, dass**
die Streckgrenze die obere Streckgrenze ($R_{eH}$) des Werkstoffes ist.

3. Zellmodul (1) nach Anspruch 1 oder 2,
**dadurch gekennzeichnet, dass**
eines der Druckelemente (4, 5) als ein Festlager (9) ausgebildet ist, welches an einem Bauelement, insbesondere einem Gehäuse, der Batterie festlegbar ist.

4. Zellmodul (1) nach Anspruch 3,
**dadurch gekennzeichnet, dass**
das andere Druckelement (5) als ein Loslager (10) ausgebildet ist, welches Verschiebungen des anderen Druckelements (5) relativ zu dem Bauelement zulässt.

5. Zellmodul (1) nach einem der vorhergehenden Ansprüche,
**dadurch gekennzeichnet, dass**
der Zuganker (6, 7) stoffschlüssig mit dem Druckelementen (4, 5) verbunden ist.

6. Batterie für ein Kraftfahrzeug, mit wenigstens einem Zellmodul (1) nach einem der vorhergehenden Ansprüche.

7. Verfahren zum Herstellen eines Zellmoduls (1) für eine Batterie eines Kraftfahrzeugs, mit den Schritten:

   - Bereitstellen einer Mehrzahl von Batteriezellen (2) zum Speichern von elektrischer Energie;
   - Bereitstellen eines Modulrahmens (3), welcher wenigstens zwei Druckelemente (4, 5) und wenigstens einen aus einem Werkstoff gebildeten Zuganker (6, 7) umfasst;
   - Anordnen der Batteriezellen (2) zwischen den Druckelementen (4, 5);

   **gekennzeichnet durch** den Schritt:

   - Spannen der Druckelemente (4, 5) gegeneinander unter Vermittlung der Batteriezellen (2) mittels des Zugankers (6, 7), wodurch der Zuganker (6, 7) auf Zug belastet wird, wobei die Druckplatten (4, 5) mittels des Zugankers (6, 7) derart gegeneinander gespannt werden, dass der Werkstoff des Zugankers (6, 7) eine Streckgrenze oder die 0,2-%-Dehngrenze erreicht.

8. Verfahren nach Anspruch 7,
**dadurch gekennzeichnet, dass**
die Batteriezellen (2) mittels einer von dem Modulrahmen (3) unterschiedlichen Verpressvorrichtung verpresst und in ihrem mittels der Verpressvorrichtung verpressten Zustand mit dem Modulrahmen (3) versehen werden, wobei der Werkstoff des Zugankers (6, 7) nach Beenden der durch die Verpressvorrichtung bewirkten Verpressung die Streckgrenze oder die 0,2-%-Dehngrenze erreicht.

9. Verfahren nach Anspruch 7 oder 8,
**dadurch gekennzeichnet, dass**
der Zuganker (6, 7) in dem mittels der Verpressvorrichtung verpressten Zustand der Batteriezellen (2) mit den Druckelementen (4, 5) verbunden wird.

## Claims

1. A cell module (1) for a battery of a motor vehicle, with a plurality of battery cells (2) for storing electrical energy, and with a module frame (3) which comprises at least two pressure elements (4, 5) between which the battery cells (2) are arranged, and at least one tension rod (6, 7) which is under tensile stress and is formed from a material, by means of which tension rod the pressure elements (4, 5) are clamped against each other, with the mediation of the battery cells (2), as a result of which the battery cells (2) are compressed,
**characterised in that**
the pressure plates (4, 5) are clamped against each other by means of the tension rod (6, 7) such that a yield point or the 0.2% offset yield strength of the material of the tension rod (6, 7) is attained in the fully charged state of the battery cells (2).

2. A cell module (1) according to Claim 1,
**characterised in that**
the yield point is the upper yield point ($R_{eH}$) of the material.

3. A cell module (1) according to Claim 1 or Claim 2,
**characterised in that**
one of the pressure elements (4, 5) is designed as a fixed bearing (9) which can be fixed on a structural element, especially a housing, of the battery.

4. A cell module (1) according to Claim 3,
**characterised in that**
the other pressure element (5) is designed as a floating bearing (10) which permits displacements of the other pressure element (5) relative to the structural element.

**5.** A cell module (1) according to one of the preceding claims,
**characterised in that**
the tension rod (6, 7) is connected by a material-formed bond to the pressure elements (4, 5).

**6.** A battery for a motor vehicle, with at least one cell module (1) according to one of the preceding claims.

**7.** A method for producing a cell module (1) for a battery of a motor vehicle, having the following steps:

- providing a plurality of battery cells (2) for storing electrical energy;
- providing a module frame (3) which comprises at least two pressure elements (4, 5) and at least one tension rod (6, 7) formed from a material;
- arranging the battery cells (2) between the pressure elements (4, 5);

**characterised by** the step:

- clamping the pressure elements (4, 5) against each other, with the mediation of the battery cells (2), by means of the tension rod (6, 7), as a result of which the tension rod (6, 7) is under tensile stress, wherein the pressure plates (4, 5) are clamped against each other by means of the tension rod (6, 7) such that the material of the tension rod (6, 7) attains a yield point or the 0.2% offset yield strength.

**8.** A method according to Claim 7,
**characterised in that**
the battery cells (2) are compressed by means of a compression device which is different from the module frame (3) and in the state in which they are compressed by means of the compression device are provided with the module frame (3), the material of the tension rod (6, 7) once the compression brought about by the compression device has ended attaining the yield point or the 0.2% offset yield strength.

**9.** A method according to Claim 7 or Claim 8,
**characterised in that**
the tension rod (6, 7) in the state of the battery cells (2) in which they are compressed by means of the compression device is connected to the pressure elements (4, 5).

**Revendications**

**1.** Module de cellule (1) pour une batterie de véhicule automobile comportant un ensemble de cellules de batterie (2) pour stocker de l'énergie électrique et un châssis de module (3) ayant au moins deux éléments de compression (4, 5) entre lesquels se trouvent les cellules de batterie (2) et au moins un tirant (6, 7) réalisé en un matériau et qui est chargé en traction, à l'aide duquel les éléments de compression (4, 5) sont serrés l'un contre l'autre par l'intermédiaire des cellules de batterie (2) en comprimant ces cellules de batterie (2),
**caractérisé en ce que**
les plaques de compression (4, 5) sont serrées l'une contre l'autre par le tirant (6, 7) pour qu'à l'état de charge complète des cellules de batterie (2), arriver à une limite d'élasticité ou la limite d'allongement à 0,2 % du matériau du tirant (6, 7).

**2.** Module de cellule (1) selon la revendication 1,
**caractérisé en ce que**
la limite élastique est la limite élastique supérieure ($R_{eH}$) du matériau.

**3.** Module de cellule (1) selon la revendication 1 ou 2,
**caractérisé en ce que**
l'un des éléments de compression (4, 5) est réalisé sous la forme d'un palier fixe (9) qui est fixé à un composant, notamment à un boîtier de la batterie.

**4.** Module de cellule (1) selon la revendication 3,
**caractérisé en ce que**
l'autre élément de compression (5) est un palier libre (10) qui permet le coulissement de l'autre élément de compression (5) par rapport à l'élément de construction.

**5.** Module de cellule (1) selon l'une des revendications précédentes,
**caractérisé en ce que**
le tirant (6, 7) est relié à l'élément de compression (4, 5) par une liaison par la matière.

**6.** Batterie de véhicule automobile comportant au moins un module de cellule (1) selon l'une des revendications précédentes.

**7.** Procédé pour réaliser un module de cellule (1) pour une batterie d'un véhicule automobile comprenant les étapes suivantes :

- fournir un ensemble de cellules de batterie (2) pour stocker de l'énergie électrique,
- fournir un châssis de module (3) ayant au moins deux éléments de compression (4, 5) et au moins un tirant (6, 7) réalisé en un matériau,
- disposer les cellules de batterie (2) entre les éléments de compression (4, 5),

procédé **caractérisé par** l'étape suivante :

- tendre les éléments de compression (4, 5) l'un contre l'autre par l'intermédiaire des cellules de batterie (2) à l'aide du tirant (6, 7) de façon à charger le tirant (6, 7) en traction, les plaques de compression (4, 5) étant serrées l'une contre l'autre par le tirant (6, 7) de façon que le matériau du tirant (6, 7) atteigne une limite élastique ou encore la limite d'allongement à 0,2 %.

8. Procédé selon la revendication 7,
   **caractérisé en ce que**
   les cellules de batterie (2) sont pressées à l'aide d'un dispositif de compression différent du châssis de module (3) et dans leur état comprimé à l'aide du dispositif de compression, les cellules sont munies du châssis de module (3),
   le matériau du tirant (6, 7) à la fin de la compression réalisée par le dispositif de compression fait que l'on atteint la limite d'extension ou la limite d'allongement à 0,2 %.

9. Procédé selon la revendication 7 ou 8,
   **caractérisé en ce que**
   les tirants (6, 7) à l'état comprimé par le dispositif de compression des cellules de batterie (2) sont reliés aux éléments de compression (4, 5).

*Fig.1*

*Fig.2*

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012120107 A1